# EUROPEAN PATENT APPLICATION

(11) **EP 4 597 981 A1**
(43) Date of publication of application: **06.08.2025**
(21) Application number: 25155306.1
(22) Date of filing: 31.01.2025
(51) Int. Cl.: H04L 61/5007, H04L 61/5061

(54) **SYSTEM AND METHOD FOR OPTIMIZING ROUTE ADVERTISEMENTS FOR STATIC IP ADDRESS ALLOCATION**

(30) Priority: 02.02.2024 IN 202441007134; 29.01.2025 US 202519039899
(71) Applicant: Mavenir Systems, Inc., Richardson, TX 75081 (US)
(72) Inventor: GUPTA, Rohit, 562125 Bangalore (IN); MISHRA, Abhishek, 562125 Bangalore (IN); PADLIKAR, Vipin, 560048 Bangalore (IN); JINDAL, Tamanna, McKinney, 75070 (US)
(74) Representative: dompatent von Kreisler Selting Werner - Partnerschaft von Patent- und Rechtsanwälten mbB

(57) **Abstract**

A method for PGWs/GGSNs to route a subnet or complete pool of static IP addresses/prefixes instead of /32 (ipv4) or 64 (Ipv6) towards a site router in an Evolved Packet System (EPS)/Packet System Network (PDN) with deployments where multiple PGWs/GGSNs are each deployed serving the same APN, and the selection of a PDN Gateway (PGW)/Gateway GPRS Support Node (GGSN) is performed by a Mobility Management Entity (MME)/Serving GPRS Support Node (SGSN) based on the Access Point Name (APN) used for PDN establishment.

## Description

### a. Field of the Disclosure

The present disclosure relates to systems and methods for radio access networks. The present disclosure focuses on the design of operation, administration and management of various network elements of 4G and 5G based mobile networks.

### SUMMARY

A method for PGWs/GGSNs to route a subnet or complete pool of static IP addresses /prefixes instead of /32 (ipv4) or 64 (Ipv6) towards a site router in an Evolved Packet System (EPS) /Packet System Network (PDN) with deployments where multiple PGWs/GGSNs are each deployed serving the same APN, and the selection of a PDN Gateway (PGW) / Gateway GPRS Support Node (GGSN)is performed by a Mobility Management Entity (MME)/ Serving GPRS Support Node (SGSN) based on the Access Point Name (APN) used for PDN establishment. Described are various embodiments of a system, method, and computer program product including program memory including instructions which, when executed by a processor, executes a method comprising: advertising a pool of static IP addresses instead of a /32 or a 64 address to a router for a PDN site requiring a static UE IP address allocation process. A dedicated PGW/GGSN can be configured with a pool of static IP addresses.

### BRIEF DESCRIPTION OF THE FIGURES

FIG. 1 illustrates an E-UTRAN network architecture.
FIG. 2. Illustrates an E-UTRA-NR Dual Connectivity network architecture.
FIG. 3 illustrates an NG-RAN architecture.
FIG. 4A shows a 3GPP EPS Architecture.
FIG. 4B shows a 3GPP PS Architecture.
FIG. 5 is a block diagram of an NR system.
FIG. 6 shows a PDN/PDP Context Establishment Procedure with a Static UE IP address.
FIG. 7 shows a PDN/PDP Context Establishment Procedure with Static UE IP address with updated APN FQDN.

### DETAILED DESCRIPTION OF THE DISCLOSURE

The present disclosure describes implementations for various wireless communication networks such as CDMA, TDMA, FDMA, OFDMA, SC-FDMA and other networks. A CDMA network can implement a radio technology such as universal terrestrial radio access (UTRA), cdma2000, and the like. UTRA includes wideband CDMA (WCDMA), time division synchronous CDMA (TD-SCDMA), and other variants of CDMA. A TDMA network can implement a radio technology such as global system for mobile communications (GSM). An OFDMA network can implement a radio technology such as evolved UTRA (E-UTRA), ultra mobile broadband (UMB), IEEE 802.11 (Wi-Fi), IEEE 802.16 (WiMAX), IEEE 802.20, Flash-OFDM^{®}, etc. UTRA and E-UTRA are part of universal mobile telecommunication system (UMTS). UTRA, E-UTRA, UMTS, LTE, LTE-A and GSM are described in documents from an organization named "3rd Generation Partnership Project" (3GPP). NR (e.g., 5G radio access) includes an evolving set of enhancements to the 3GPP 3G LTE mobile standard. Implementations as described herein can be employed for radio technologies and wireless networks as described above and herein as well as other wireless networks and radio technologies.

Reference is made to Third Generation Partnership Project (3GPP) and the Internet Engineering Task Force (IETF) in accordance with embodiments of the present disclosure. The present disclosure employs abbreviations, terms and technology defined in accord with Third Generation Partnership Project (3GPP) and/or Internet Engineering Task Force (IETF) technology standards and papers, including the following standards and definitions. 3GPP and IETF technical specifications (TS), standards (including proposed standards), technical reports (TR) and other papers are incorporated by reference in their entirety hereby, define the related terms and architecture reference models that follow.
3GPP TS 3GPP TS 23.401 version 16.8.0 Release 16: " General Packet Radio Service (GPRS) enhancements for Evolved Universal Terrestrial Radio Access Network (E-UTRAN) access.
3GPP TS 36.213 v 17.1.0 (2022-05)
3GPP TS 36.300 V17.0.0 (2022-03)

### Abbreviations:

- APN: Access Point Name
- CU: Control Unit
- DU: Distributed Unit
- DNS: Domain Name System/Server
- EPS: Evolved Packet System
- E-UTRAN: Evolved UTRAN
- EN-DC: E-UTRA-NR Dual Connectivity
- eNB: E-UTRAN NodeB
- EPC: Evolved Packet Co
- FQDN: Fully Qualified Domain Name
- GGSN: Gateway GPRS Support Node
- GPRS: General Packet Radio Service
- HLR: Home Location Register
- HSS: Home Subscriber Service
- MME: Mobility Management Entity
- NI: Network Identifier
- NR: NR Radio Access
- PDN: Packet Data Network or Public Data Network
- PDCP: Packet Data Convergence Protocol
- PCH: Physical Channel
- PGW: PDN Gateway
- SGW: Serving Gateway
- SGSN: Serving GPRS Support Node

### Definitions

**En-gNB:** a node providing NR user plane and control plane protocol terminations towards the UE, and acting as Secondary Node in EN-DC.

**gNB:** a node providing NR user plane and control plane protocol terminations towards the UE, and connected via the NG interface to the 5GC.

**gNB Central Unit** (gNB-CU): a logical node hosting RRC, SDAP and PDCP protocols of the gNB or RRC and PDCP protocols of the en-gNB that controls the operation of one or more gNB-DUs. The gNB-CU terminates the F1 interface connected with the gNB-DU.

**gNB Distributed Unit** (gNB-DU): a logical node hosting RLC, MAC and PHY layers of the gNB or en-gNB, and its operation is partly controlled by gNB-CU. One gNB-DU supports one or multiple cells. One cell is supported by only one gNB-DU. The gNB-DU terminates the F1 interface connected with the gNB-CU.

**gNB-CU-Control Plane** (gNB-CU-CP): a logical node hosting the RRC and the control plane part of the PDCP protocol of the gNB-CU for an en-gNB or a gNB. The gNB-CU-CP terminates the E1 interface connected with the gNB-CU-UP and the F1-C interface connected with the gNB-DU.

**gNB-CU-User Plane** (gNB-CU-UP): a logical node hosting the user plane part of the PDCP protocol of the gNB-CU for an en-gNB, and the user plane part of the PDCP protocol and the SDAP protocol of the gNB-CU for a gNB. The gNB-CU-UP terminates the E1 interface connected with the gNB-CU-CP and the F1-U interface connected with the gNB-DU.

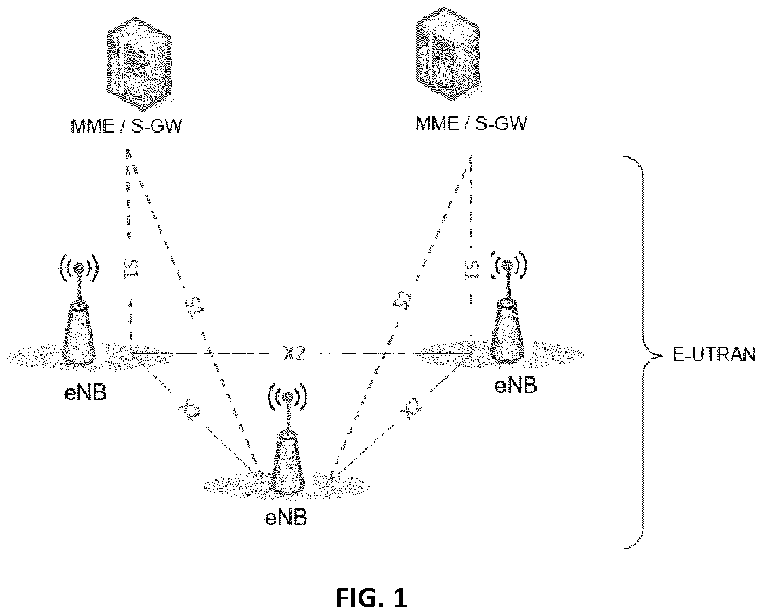

An E-UTRAN architecture is illustrated in FIG. 1. The E-UTRAN comprises eNBs, which provides the E-UTRA user plane (PDCP/RLC/MAC/PHY) and control plane (RRC) protocol terminations towards the UE. The eNBs are interconnected with each other by the X2 interface. The eNBs are also connected by the S1 interface to the EPC (Evolved Packet Core), more specifically to the MME (Mobility Management Entity) by the S1-MME interface and to the Serving Gateway (S-GW) by the S1-U interface. The S1 interface supports a many-to-many relation between MMEs/Serving Gateways and eNBs.

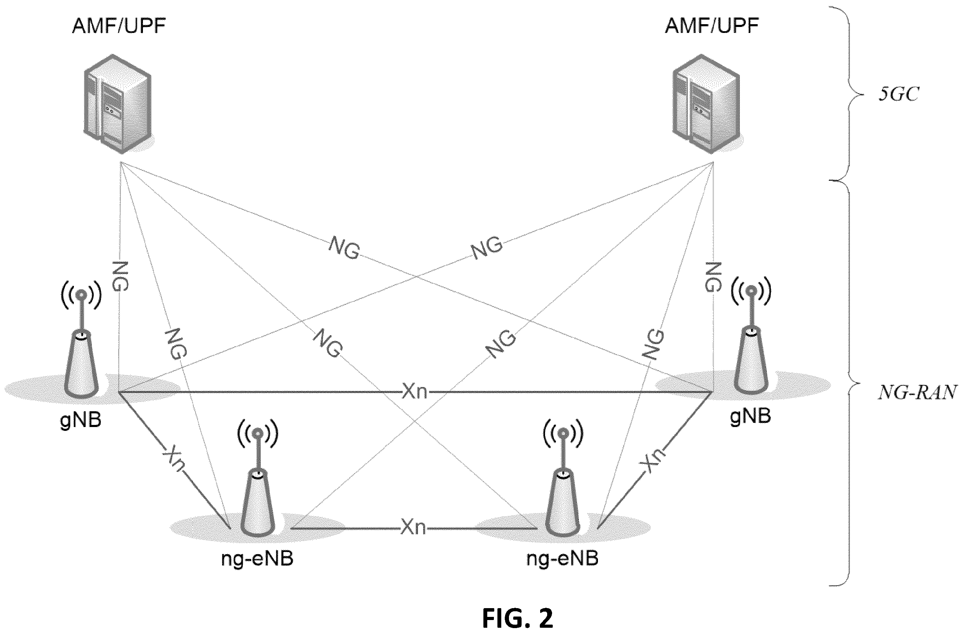

E-UTRAN also supports MR-DC via E-UTRA-NR Dual Connectivity (EN-DC), in which a UE is connected to one eNB that acts as a MN and one en-gNB that acts as a SN. An EN-DC architecture is illustrated in FIG. 2. The eNB is connected to the EPC via the S1 interface and to the en-gNB via the X2 interface. The en-gNB can also be connected to the EPC via the S1-U interface and other en-gNBs via the X2-U interface. In EN-DC, an en-gNB comprises gNB-CU and gNB-DU(s).

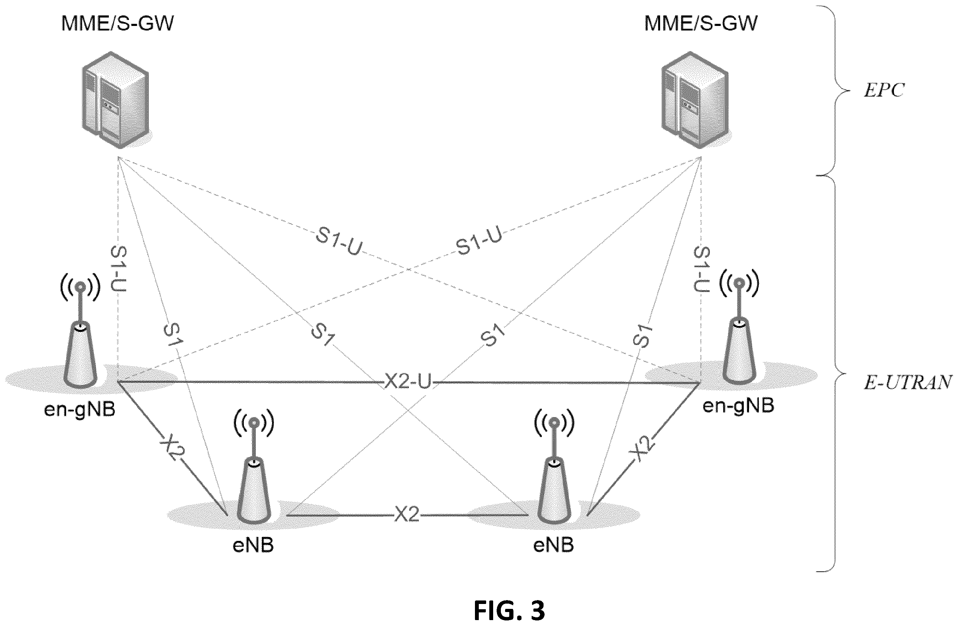

E-UTRAN also supports an NG-RAN architecture. An NG-RAN architecture is illustrated in FIG. 3. An NG-RAN node is either:
a gNB, providing NR user plane and control plane protocol terminations towards the UE; or
an ng-eNB, providing E-UTRA user plane and control plane protocol terminations towards the UE. (3GPP TS 38.300 V17.0.0.)

As shown in FIGS. 1-3, the gNBs and ng-eNBs are interconnected with each other by the Xn interface. The gNBs and ng-eNBs are also connected by the NG interfaces to the 5GC, more specifically to the AMF (Access and Mobility Management Function) by the NG-C interface and to the UPF (User Plane Function) by the NG-U interface. The gNB and ng-eNB host functions for Radio Resource Management such as: Radio Bearer Control, Radio Admission Control, Connection Mobility Control, Dynamic allocation of resources to UEs in both uplink and downlink (scheduling), connection setup and release; session Management; QoS Flow management and mapping to data radio bearers; Dual Connectivity. Tight interworking between NR and E-UTRA. NB-IoT UE is supported by ng-eNB.

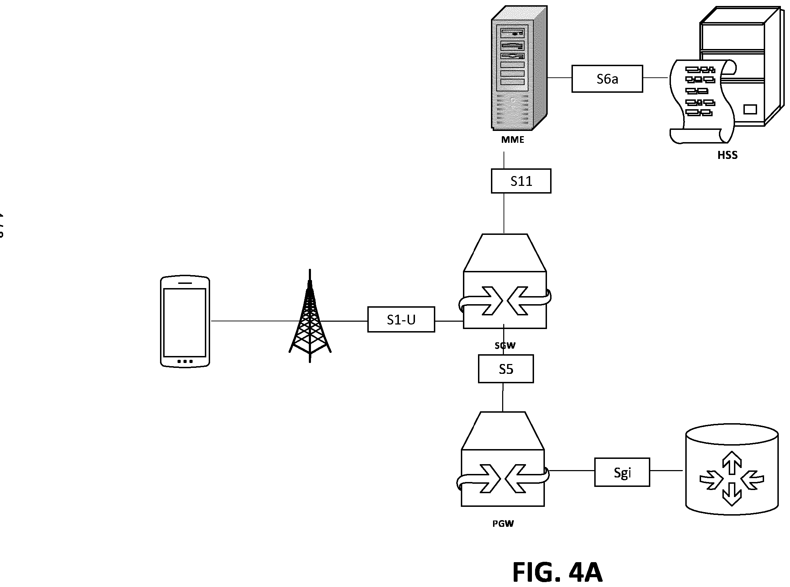

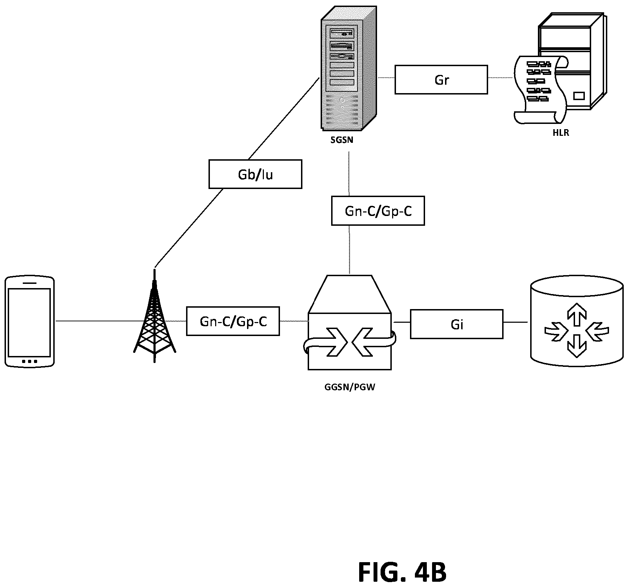

As shown in FIG. 4A, an S1-U interface serves as a reference point between E-UTRAN and Serving GW for per bearer user plane tunnelling and inter eNodeB path switching during handover. This reference point corresponds to Gn-C/Gp-C for 3GPP accesses as shown in FIG. 4B.

An S5 interface provides user plane tunnelling and tunnel management between Serving GW and PDN GW. The S5 interface is used for Serving GW relocation due to UE mobility, and if the Serving GW needs to connect to a non-collocated PDN GW, for the required PDN connectivity.

An S6a interface enables transfer of subscription and authentication data for authenticating/authorizing user access to the evolved system (AAA interface) between MME and an HSS. This reference point corresponds to Gr for 3GPP accesses as shown in FIG. 4B.

An S11 interface is a reference point providing control plane between MME and Serving GW. In addition, in order to support Control Plane CIoT EPS Optimization, the S11-U reference point provides user plane between MME and Serving GW. This reference point corresponds to Gn-C/Gp-C for 3GPP accesses as shown in FIG. 4B.

As shown in FIG. 4A, an SGi interface is the reference point between the PDN GW and the packet data network. Packet data network can be an operator external public or private packet data network or an intra operator packet data network, e.g. for provision of IMS services. This reference point corresponds to Gi for 3GPP accesses as shown in FIG. 4B.

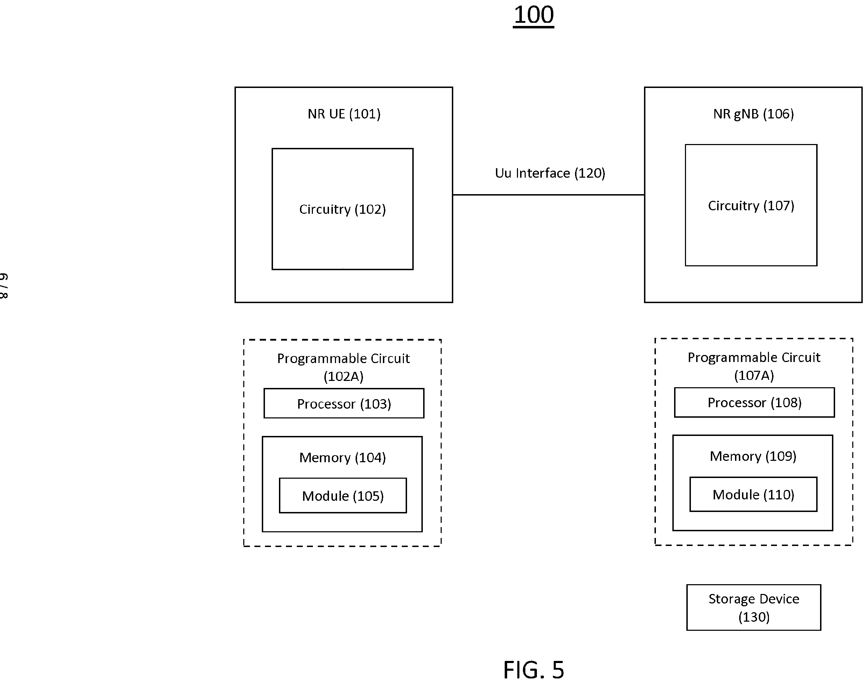

FIG. 5 is a block diagram of a system 100. System 100 includes a NR UE 101, a NR gNB 106. The NR UE and NR gNB are communicatively coupled via a Uu interface 120.

NR UE 101 includes electronic circuitry, namely circuitry 102, that performs operations on behalf of NR UE 101 to execute methods described herein. Circuity 102 can be implemented with any or all of (a) discrete electronic components, (b) firmware, and (c) a programmable circuit 102A.

NR gNB 106 includes electronic circuitry, namely circuitry 107, that performs operations on behalf of NR gNB 106 to execute methods described herein. Circuity 107 can be implemented with any or all of (a) discrete electronic components, (b) firmware, and (c) a programmable circuit 107A.

Programmable circuit 107A, which is an implementation of circuitry 107, includes a processor 108 and a memory 109. Processor 108 is an electronic device configured of logic circuitry that responds to and executes instructions. Memory 109 is a tangible, non-transitory, computer-readable storage device encoded with a computer program. In this regard, memory 109 stores data and instructions, i.e., program code, that are readable and executable by processor 108 for controlling operations of processor 108. Memory 109 can be implemented in a random-access memory (RAM), a hard drive, a read only memory (ROM), or a combination thereof. One of the components of memory 109 is a program module, namely module 110. Module 110 includes instructions for controlling processor 108 to execute operations described herein on behalf of NR gNB 106.

The term "module" is used herein to denote a functional operation that can be embodied either as a stand-alone component or as an integrated configuration of a plurality of subordinate components. Thus, each of module 105 and 110 can be implemented as a single module or as a plurality of modules that operate in cooperation with one another.

While modules 110 are indicated as being already loaded into memories 109, and module 110 can be configured on a storage device 130 for subsequent loading into their memories 109. Storage device 130 is a tangible, non-transitory, computer-readable storage device that stores module 110 thereon. Examples of storage device 130 include (a) a compact disk, (b) a magnetic tape, (c) a read only memory, (d) an optical storage medium, (e) a hard drive, (f) a memory unit comprising of multiple parallel hard drives, (g) a universal serial bus (USB) flash drive, (h) a random-access memory, and (i) an electronic storage device coupled to NR gNB 106 via a data communications network.

Uu Interface (120) is the radio link between the NR UE and NR gNB, which is compliant to the 5G NR specification.

UEs 101 can be dispersed throughout wireless communication network, and each UE can be stationary or mobile. A UE includes: an access terminal, a terminal, a mobile station, a subscriber unit, a station, and so on. A UE can also include be a cellular phone (e.g., a smart phone), a personal digital assistant (PDA), a wireless modem, a wireless communication device, a handheld device, a laptop computer, a cordless phone, a wireless local loop (WLL) station, a tablet, a camera, a gaming device, a drone, a robot/robotic device, a netbook, a smartbook, an ultrabook, a medical device, medical equipment, a healthcare device, a biometric sensor/device, a wearable device such as a smart watch, smart clothing, smart glasses, a smart wristband, and/or smart jewellery (e.g., a smart ring, a smart bracelet, etc.), an entertainment device (e.g., a music device, a video device, a satellite radio, etc.), industrial manufacturing equipment, a global positioning system (GPS) device, or any other suitable device configured to communicate via a wireless or wired medium. UEs can include UEs considered as machine-type communication (MTC) UEs or enhanced/evolved MTC (eMTC) UEs. MTC/eMTC UEs that can be implemented as loT UEs. IoT UEs include, for example, robots/robotic devices, drones, remote devices, sensors, meters, monitors, cameras, location tags, etc., that can communicate with a BS, another device (e.g., remote device), or some other entity. A wireless node can provide, for example, connectivity for or to a network (e.g., a wide area network such as Internet or a cellular network) via a wired or wireless communication link.

One or more UEs 101 in the wireless communication network (e.g., an LTE network) can be a narrowband bandwidth UE. As used herein, devices with limited communication resources, e.g. smaller bandwidth, are considered as narrowband UEs. Similarly, legacy devices, such as legacy and/or advanced UEs (e.g., in LTE) can be considered as wideband UEs. Wideband UEs are generally understood as devices that use greater amounts of bandwidth than narrowband UEs.

In some implementations, access to a wireless interface can be scheduled, in which a scheduling entity (e.g., BS) allocates bandwidth resources for devices and equipment within its service area or cell. As scheduling entity can be configured to schedule, assign, reconfigure, and release resources for one or more subordinate entities. BSs are not the only entities that can function as a scheduling entity. In some examples, a UE 106 (or other device) can function as master node scheduling entity, scheduling resources for one or more secondary node subordinate entities (e.g., one or more other UEs 120). Thus, in a wireless communication network with a scheduled access to timefrequency resources and having a cellular configuration, a P2P configuration, and a mesh configuration, a scheduling entity and one or more subordinate entities can communicate utilizing the scheduled resources.

### Further Description of Implementations

In an EPS/PS network, the PGWs/GGSNs are responsible for allocating or sending the IP address/prefix to the UE for the PDN connections. PGWs/GGSNs use a different UE IP allocation method to allocate a UE IP address/prefix for a PDN connection, such as dynamic IP address allocation from local pool, or preconfigured/static IP address/prefix in HSS/HLR subscription records, and so on.

In the EPS/PS network with deployments where multiple PGWs/GGSNs are each deployed serving the same APN, the PDN establishment request can land on any of the PGWs/GGSNs, as the selection of the PGW/GGSN is performed by MME/SGSN based on the APN used for PDN establishment.

The same APN can be used for any type of UE IP address allocation method. For example, for certain premium subscribers, the static IP address/prefix can be used, whereas for other subscribers, a local pool preconfigured on PGWs/GGSNs can be used for the same APN. This poses a restriction on the PGWs/GGSNs to advertise the /32 (ipv4) or 64 (Ipv6) routes to the external routers to route the downlink packet to the correct PGWs/GGSNs where a static IP address allocation method is used for PDN Connections. With the increase in the number of enterprise customers each using the static IP address/prefix for the PDN connections, this puts an additional requirement on the site routers to handle such a huge number of static routes.

An exemplary advantage of implementation as described herein is that the system can help in resolve the above restriction of /32 (ipv4) or 64 (Ipv6) route advertisement towards the site routers for the PDNs that require a static UE IP address allocation method. Another advantage is that it becomes feasible for the PGWs/GGSNs to route a subnet or complete pool of static IP addresses /prefixes instead of /32 (ipv4) or 64 (Ipv6) towards the site router.

Implementations as described herein take advantage of the following existing MME/SGSN functionalities as defined by 3GPP:
- Subscription fetch from HSS/HLR: MME/SGSN gets from the subscription information the detail of whether the static or any other UE IP address allocation method is to be used for the PDN connection.
- PGW/GGSN selection for a PDN Connection: in deployments where multiple PGWs/GGSNs are used for the same APN, the MME/SGSN can enhance the PGW/GGSN selection method to select a dedicated PGW/GGSN for all the PDN Connections to the same APN that require static IP address allocation.

Since all the PDNs that a require static IP address allocation method can be hosted on a dedicated PGW/GGSN, a dedicated PGW/GGSN can be preconfigured with the static IP Pools and can advertise the complete static IP pool instead of /32 (ipv4) or 64 (Ipv6) address to the site routers. The other PDNs that do not require static IP address/prefix allocation can continue to be hosted on any PGWs/GGSNs, if the same APN is configured on multiple PGWs/GGSNs in the network. Implementations can also be supported on the deployments where the PGW has control and user plane separation. Based on custom implementation between PGW-C and PGW-U, the complete static IP pool instead of /32 (ipv4) or 64 (Ipv6) address to the site routers can be advertised.

MME/SGSN can enhance the PGW/GGSN selection method for the PDNs that require static IP address as follows. If DNS is used for PGW/GGSN selection, the MME/SGSN can append a specific Keyword in the NI part of the APN while querying the DNS. The DNS can have a mapping between the APN (appended NI) and the corresponding dedicated PGW/GGSN to serve the PDN connection which requires static IP address allocation method. If a local configuration is used for PGW/GGSN, the MME/SGSN can configure a mapping between the APNs and the dedicated PGW/GGSN that can be used for PDNs that require static IP address allocation for the APN.

The following reference examples can be used to understand the solution.

### PGW Selection via DNS for APN <test.mcc.mnc.gprs>

For static IP allocated PDNs, the NI part of the APN test can be appended with the Keyword "static" to select a dedicated PGW/GGSN. For instance, <test.static.mcc.mnc.gprs> can be used in the query parameter towards the DNS for PGW/GGSN selection). A PGW Selection via a Local Configuration at MME for APN can be <test.mcc.mnc.gprs>. For instance, for static IP allocated PDNs, the MME can configure the following mapping between the APN and the dedicated PGW/GGSN:

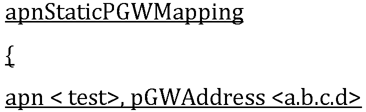

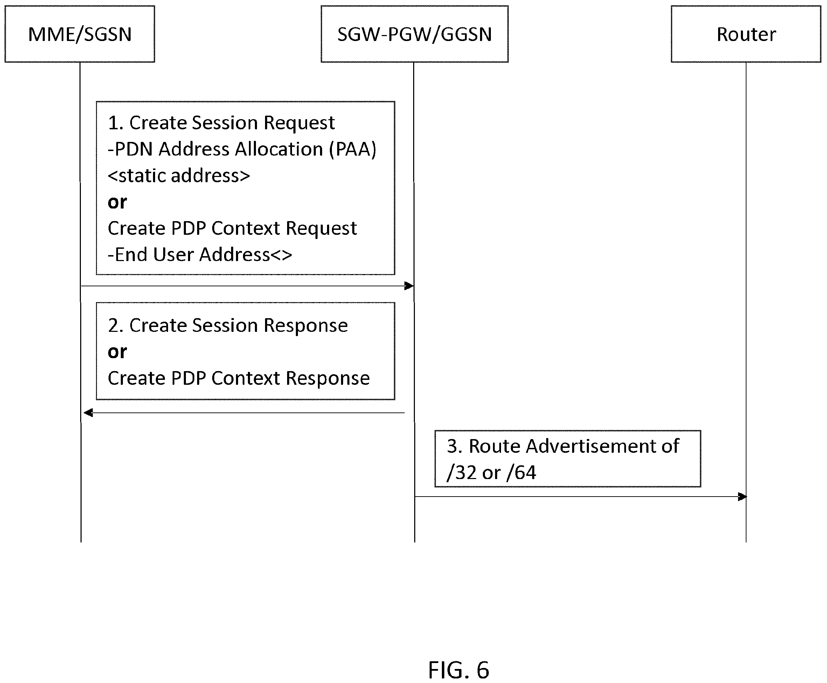

FIG. 6 shows a conventional PDN/PDP Context Establishment Procedure with a Static UE IP address. As shown in FIG. 6, at block 1, the MME/SSGN sends to the SGW-PGW/GGSN a Create Session Request PDN Address Allocation (PAA) <static address> or a Create PDP Context Request -End User Address<>. At block 2, the SGW-PGW/GSSN sends back to the MME/SSGN a respective Create Session Response or Create PDP Context. At block 3, the SGW-PGW/GGSN sends the Route Advertisement of /32 or /64 to the Router.

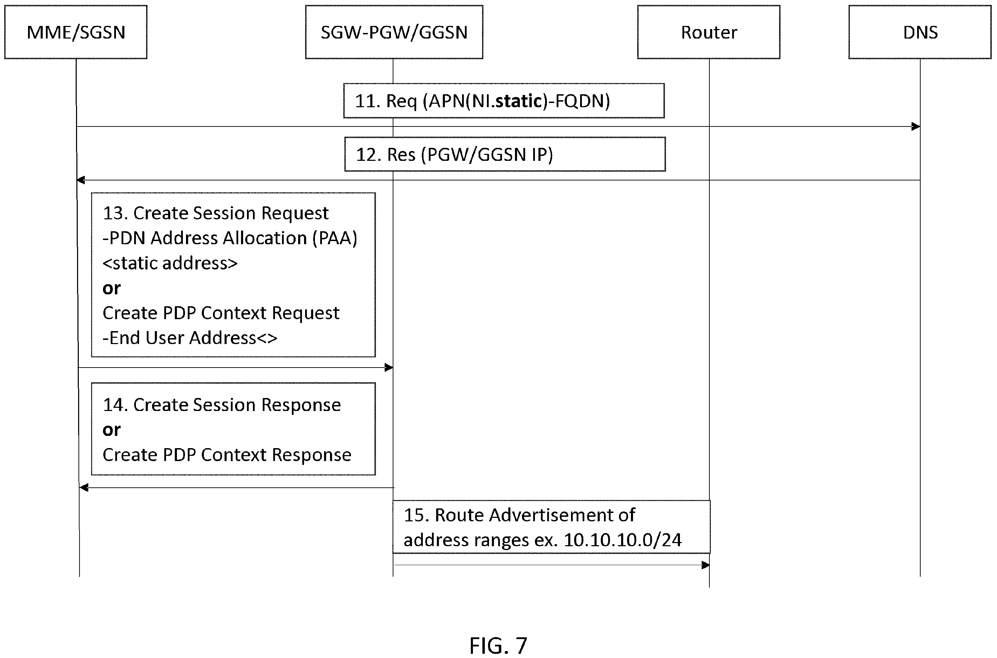

FIG. 7 shows a PDN/PDP Context Establishment Procedure with Static UE IP address with updated APN FQDN. As shown in FIG. 7, at block 11, the MME/SGSN sends the DNS request: Req (APN(NI.static)-FQDN. At block 12 the DNS responds to the MME/SGSN: Res (PGW/GGSN IP). At block 13, the MME/SGSN sends a Create Session Request to SGW-PGW/GGSN: PDN Address Allocation (PAA) <static address> or a Create PDP Context Request: End User Address<>. At block 14, the SGW-PGW/GGSN returns to the MME/SGSN a respective Create Session Response or Create PDP Context Response. At block 15, the SGW-PGW/GGSN sends the Router a Route Advertisement of address ranges (e.g.: <10.10.10.0/24>).

It will be understood that implementations and embodiments can be implemented by computer program instructions. These program instructions can be provided to a processor to produce a machine, such that the instructions, which execute on the processor, create means for implementing the actions specified herein. The computer program instructions can be executed by a processor to cause a series of operational steps to be performed by the processor to produce a computer-implemented process such that the instructions, which execute on the processor to provide steps for implementing the actions specified. Moreover, some of the steps can also be performed across more than one processor, such as might arise in a multi-processor computer system or even a group of multiple computer systems. In addition, one or more blocks or combinations of blocks in the flowchart illustration can also be performed concurrently with other blocks or combinations of blocks, or even in a different sequence than illustrated without departing from the scope or spirit of the disclosure.

Accordingly, blocks of the flowchart illustration support combinations for performing the specified actions, combinations of steps for performing the specified actions and program instructions for performing the specified actions. The foregoing examples should not be construed as limiting and/or exhaustive, but rather, an illustrative use case to show an implementation of at least one of the various embodiments.

## Claims

1. A method comprising:
preconfiguring a dedicated Packet Data Network (PDN) Gateway(PGW)/ Gateway General Packet Radio Service (GPRS) Support Node (GGSN) with a pool of static IP addresses; and
advertising the pool of static IP addresses to a router for a PDN site requiring a static UE IP address allocation process instead of advertising the pool of static IP addresses to a /32 or a 64 address,.

2. The method of claim 1, further comprising:
appending, by a Mobility Management Entity(MME)/Serving GPRS Support Node (SGSN), a specific Keyword in an NI part of an Access Point Name (APN) while querying a Domain Name System (DNS).

3. The method of claim 2, further comprising:
mapping, by a DNS, the APN with the appended specific Keyword in the NI part and the dedicated PGW/GGSN to serve a PDN connection requiring the static IP address allocation process.

4. The method of claim 2, further comprising:
sending to the DNS, by the MME/SGSN, a DNS request with an APN with an appended Keyword in the NI part, wherein the DNS Request preferably includes a Req (APN(NI.static) FQDN message;
receiving, by the MME/SGSN from a DNS, a response including an PGW/GGSN IP address, wherein the and the DNS Response preferably includes a Res (PGW/GGSN IP) message;
sending by the MME/SGSN to the SGW-PGW/GGSN:
a Create Session Request to the SGW-PGW/GGSN for a static address PDN Address Allocation, or
a Create Packet Data Protocol (PDP) Context Request including an End User Address;
receiving, from the SGW-PGW/GGSN at the MME/SGSN a respective Create session Response or Create PDP Context Response; and
sending, by the SGW-PGW/GGSN to the router, a Route Advertisement of the pool of the static IP addresses, wherein the Route Advertisement of the pool of static IP addresses preferably comprises a range of the static IP addresses.

5. A system comprising:
a dedicated Packet Data Network (PDN) Gateway(PGW)/Gateway General Packet Radio Service (GPRS) Support Node (GGSN) preconfigured with a pool of static IP addresses; wherein the PGW/GGSN is configured to, instead of advertising the pool of static IP addresses to a /32 or a 64 address, advertise the pool of static IP addresses to a router for a PDN site requiring a static UE IP address allocation process.

6. The system of claim 5, further comprising:
a Mobility Management Entity(MME)/Serving GPRS Support Node (SGSN) configured to append a specific Keyword in an NI part of an Access Point Name (APN) while querying a Domain Name System (DNS).

7. The system of claim 5, further comprising:
a DNS configured to map an APN with an appended specific Keyword in the NI part of an Access Point Name (APN) and a dedicated PGW/GGSN to serve a PDN connection requiring the static IP address allocation process.

8. The system of claim 7, further comprising MME/SGSN being configured to at least:
send to a DNS a DNS request with the APN with the appended Keyword in the NI part, wherein the DNS Request preferably includes a Req (APN(NI.static) FQDN message;
receive, from the DNS, a DNS Response including the PGW/GGSN IP address, and the DNS Response preferably includes a Res (PGW/GGSN IP) message; and
send to the SGW-PGW/GGSN:
a Create Session Request to the SGW-PGW/GGSN for a static address PDN Address Allocation, or
a Create Packet Data Protocol (PDP) Context Request including an End User Address.

9. The system of claim 8, further comprising the SGW-PGW/GGSN being configured to at least:
send, to the MME/SGSN, a respective Create session Response or Create PDP Context Response; and
send, to the router, a Route Advertisement of the pool of the static IP addresses, wherein the Route Advertisement of the pool of static IP addresses preferably comprises a range of the static IP addresses.

10. A computer program product comprising a computer-readable storage medium encoded with instructions that, when executed by at least one processor within a computer system that comprises one or more processors and a memory operatively coupled to at least one of the processors, cause the computer system at least to:
at a dedicated Packet Data Network (PDN) Gateway(PGW)/Gateway General Packet Radio Service (GPRS) Support Node (GGSN) preconfigured with a pool of static IP addresses, instead of advertising the pool of static IP addresses to a/32 or a 64 address, advertise the pool of static IP addresses to a router for a PDN site requiring a static UE IP address allocation process.

11. The computer program product of claim 10, wherein the instructions comprise instructions that, when executed by at least one of the processors, cause the computer system at least to:
append, at a Mobility Management Entity(MME)/Serving GPRS Support Node (SGSN), a specific Keyword in an NI part of an Access Point Name (APN) while querying a Domain Name System (DNS).

12. The computer program product of claim 11, wherein the instructions comprise instructions that, when executed by at least one of the processors, cause the computer system at least to:
map, by a DNS, the APN with the appended specific Keyword in the NI part and the dedicated PGW/GGSN to serve a PDN connection requiring the static IP address allocation process.

13. The computer program product of claim 12, wherein the instructions comprise instructions that, when executed by at least one of the processors, cause the computer system at least, at the MME/SGSN:
send to a DNS a DNS request with the APN with the appended Keyword in the NI part;
receive, from the DNS, a response including the PGW/GGSN IP address; and
send to the SGW-PGW/GGSN:
a Create Session Request to the SGW-PGW/GGSN for a static address PDN Address Allocation, or
a Create Packet Data Protocol (PDP) Context Request including an End User Address.

14. The computer program product of claim 13, wherein the instructions comprise instructions that, when executed by at least one of the processors, cause the computer system at least, at the SGW-PGW/GGSN:
send, to the MME/SGSN, a respective Create session Response or Create PDP Context Response; and
send, to the router, a Route Advertisement of the pool of the static IP addresses.

15. The computer program product of claim 14 wherein the Route Advertisement of the pool of static IP addresses comprises a range of the static IP addresses.
